# EUROPEAN PATENT APPLICATION

(11) **EP 3 453 948 A1**
(43) Date of publication of application: **13.03.2019**
(21) Application number: 18193219.5
(22) Date of filing: 07.09.2018
(51) Int. Cl.: F21S 41/24, F21S 41/663, F21V 8/00, G02B 6/04

(54) **OPTIC FIBER PANEL SYSTEMS AND METHODS**

(30) Priority: 11.09.2017 US 201715700534
(71) Applicant: Valeo North America, Inc., Troy, MI 48083 (US)
(72) Inventor: BAKER, Davis, SEYMOUR, 47274 (US)
(74) Representative: Valeo Vision

(57) **Abstract**

A light module includes a plurality of optic fibers configured as an optic fiber panel, wherein a mounting axis is positioned parallel to the optic fiber panel, a normal axis is positioned perpendicular to the optic fiber panel, a light axis is positioned vertically with respect to a targeted light transmission direction, and a material bias axis representing an actual light transmission direction is positioned a predetermined radial amount from the normal axis; and a first light source coupled to a first end of the optic fiber panel, wherein a direction and power of transmitted light rays from the first light source through the optic fiber panel are adjustable to align the material bias axis with the light axis.

## Description

### BACKGROUND

Motor vehicles contain numerous lighting devices for both interior and exterior illumination. For example, exterior vehicle lighting devices may perform stop lamp functions, tail lamp functions, headlamp functions, signaling, parking, and fog lamp functions.

It is prudent for vehicle manufacturers to design vehicle lighting devices which meet the technical requirements of various standards around the world and in particular, in their associated marketing regions. In recent years, vehicle lighting has also become important for its aesthetic appeal to consumers. Thus, vehicle manufacturers have made an effort to design vehicle lighting devices in consideration of the styling of the vehicle on which the lighting devices are mounted. Further, vehicle manufacturers can provide optional lighting effects (in addition to the required lighting functionality) to enhance a vehicle's illumination performance and styling.

It may be technically challenging to provide aesthetically appealing vehicle lighting devices while also meeting the necessary cost, technology, and regulatory requirements. For example, it may be difficult to center the maximum region of a light distribution about an intended center of light distribution.

The "background" description provided herein is for the purpose of generally presenting the context of the disclosure. Work of the presently named inventors, to the extent it is described in this background section, as well as aspects of the description which may not otherwise qualify as conventional art at the time of filing, are neither expressly nor impliedly admitted as conventional art against the present disclosure.

### SUMMARY

Embodiments described herein include the following aspects.
(1) A light module includes a plurality of optic fibers configured as an optic fiber panel, wherein a mounting axis is positioned parallel to the optic fiber panel, a normal axis is positioned perpendicular to the optic fiber panel, a light axis is positioned in line with a targeted light transmission direction, and a material bias axis representing an actual light transmission direction is positioned a predetermined radial amount from the normal axis; and a first light source coupled to a first end of the optic fiber panel, wherein a direction and power of transmitted light rays from the first light source through the optic fiber panel are adjustable to align the material bias axis with the light axis.
(2) The light module of (1), wherein the material bias axis comprises a primary light transmission axis about which the transmitted light rays are centered.
(3) The light module of either one of (1) or (2), wherein the material bias axis is positioned the predetermined radial amount from the normal axis in a first direction when the light rays are transmitted through the optic fiber panel in the first direction, and the material bias axis is positioned the predetermined radial amount from the normal axis in a second direction when the light rays are transmitted through the optic fiber panel in the second direction.
(4) The light module of any one of (1) through (3), further includes a second light source coupled to a second end of the optic fiber panel.
(5) The light module of any one of (1) through (4), wherein a position of the material bias axis is adjusted via one or more adjustments to a power level of the first light source and to a power level of the second light source.
(6) The light module of any one of (1) through (5), wherein a maximum region of illumination of the light module approaches a central targeted region when the material bias axis approaches the light axis.
(7) The light module of any one of (1) through (6), wherein a position of the material bias axis is determined by aberrations within the optic fiber panel or a geometry of the optic fiber panel.
(8) The light module of any one of (1) through (7), wherein a position of the material bias axis is determined by a number of light sources.
(9) The light module of any one of (1) through (8), wherein a position of the material bias axis is determined by a mounting angle of the light module.
(10) A method of aligning a transmitted light, including transmitting light rays from a first light source through an optic fiber panel, wherein the first light source is coupled to a first end of the optic fiber panel; emanating the light rays from the optic fiber panel along a material bias axis, wherein the material bias axis represents an actual light transmission direction and is positioned a predetermined radial amount from an axis normal to a mounting axis of the optic fiber panel; and adjusting a position of the material bias axis to align with a light axis positioned in line with a targeted light transmission direction.
(11) The method of aligning a transmitted light of (10), further including transmitting the light rays through the optic fiber panel in a first direction; and adjusting the position of the material bias axis by the predetermined radial amount in the first direction.
(12) The method of aligning a transmitted light of either one of (10) or (11), further including transmitting the light rays through the optic fiber panel in a second direction, via a second light source coupled to a second end of the optic fiber panel; and adjusting the position of the material bias axis by the predetermined radial amount in the second direction.
(13) The method of aligning a transmitted light of any one of (10) through (12), further including transmitting the light rays through the optic fiber panel in the first direction via the first light source and in the second direction via the second light source; and adjusting a power level of one or more of the first light source and the second light source to align the position of the material bias axis with the light axis.
(14) The method of aligning a transmitted light of any one of (10) through (13), further including adjusting the position of the material bias axis via adjusting a power level of the first light source or adjusting a power level of the second light source.
(15) The method of aligning a transmitted light of any one of (10) through (14), further including adjusting the position of the material bias axis via adjusting aberrations within the optic fiber panel or adjusting a geometry of the optic fiber panel.
(16) The method of aligning a transmitted light of any one of (10) through (15), further including adjusting the position of the material bias axis via adjusting a number of light sources.
(17) The method of aligning a transmitted light of any one of (10) through (16), further including adjusting the position of the material bias axis via adjusting a mounting angle of the light module.
(18) The method of aligning a transmitted light of any one of (10) through (17), wherein the material bias axis comprises a primary light transmission axis about which the transmitted light rays are centered.
(19) A product formed by any one of (10) through (18).

It has to be noticed that all the features, described in the specification in relation to an optic fiber panel, can be applied similarly to an optic fiber bundle, a light guide bundle or a light guide weaving. The light guide is an optic part able to guide the light by multiple total internal reflections, as example from a light admission area to a light outcoupling area.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Fig. 1 illustrates a front-end of an exemplary motor vehicle according to one embodiment;
Fig. 2 is a schematic diagram of an exemplary roadway, a motor vehicle, and a light distribution pattern according to one embodiment;
Fig. 3 illustrates an exemplary luminous intensity distribution according to one embodiment;
Fig. 4 illustrates an exemplary luminous intensity distribution according to one embodiment;
Fig. 5 illustrates a left oriented maximum intensity luminous distribution according to one embodiment;
Fig. 6 illustrates a right oriented maximum intensity luminous distribution according to one embodiment;
Fig. 7 is a Cartesian coordinate system illustrating a luminous intensity distribution for a right side originating light source according to one embodiment;
Fig. 8 is a Cartesian coordinate system illustrating a luminous intensity distribution for a left side originating light source according to one embodiment;
Fig. 9 illustrates a centered maximum intensity luminous distribution according to one embodiment;
Fig. 10 is a block diagram with representative axes that illustrates a centered maximum intensity luminous distribution according to one embodiment;
Fig. 11 is a block diagram with representative axes that illustrates a light module with two sets of first and second light sources in a hybrid fiber optic panel according to one embodiment;
Fig. 12 illustrates a functional block diagram of a vehicle lamp assembly according to one embodiment; and
Fig. 13 is a flowchart for an exemplary method of aligning a transmitted light according to one embodiment.

### DETAILED DESCRIPTION

The following descriptions are meant to further clarify the present disclosure by giving specific examples and embodiments of the disclosure. These embodiments are meant to be illustrative rather than exhaustive. The full scope of the disclosure is not limited to any particular embodiment disclosed in the specification, but rather is defined by the claims.

In the interest of clarity, not all of the features of the implementations described herein are shown and described in detail. It will be appreciated that in the development of any such actual implementation, numerous implementation-specific decisions will be made in order to achieve the developer's specific goals, such as compliance with application- and business-related constraints, and that these specific goals will vary from one implementation to another and from one developer to another.

Embodiments described herein provide lighting modules having one or more solid state light sources. As used herein, a solid state light source refers to a type of light source using an electroluminescence phenomenon in which a material emits light in response to passage of an electric current or in response to a strong electric field. Examples of light sources include, but are not limited to semiconductor light-emitting diodes (LEDs), organic light-emitting diodes (OLEDs), polymer light-emitting diodes (PLEDs), and monolithic light-emitting diodes (MLEDs). Lighting modules described herein can also include one or more bulb sources, such as a halogen light source or a high intensity discharge (HID) light source.

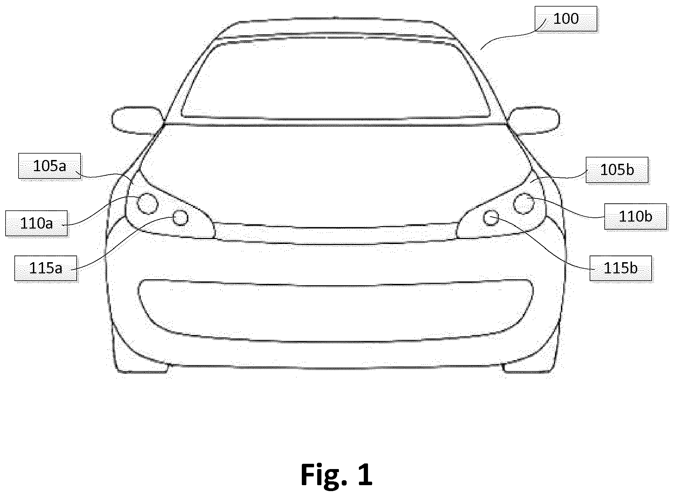

Fig. 1 illustrates a front-end of an exemplary motor vehicle 100. Motor vehicle 100 includes two headlamp assemblies 105a and 105b. Headlamp assemblies 105a and 105b include low beam headlamps 110a and 110b (also referred to as a lower or dipped beam) and high beam headlamps 115a and 115b (also referred to as a main or driving beam). Typically, the low beam headlamps 110a and 110b are used whenever another vehicle is on the road directly ahead of motor vehicle 100 and/or whenever another vehicle is approaching motor vehicle 100 from an opposite direction.

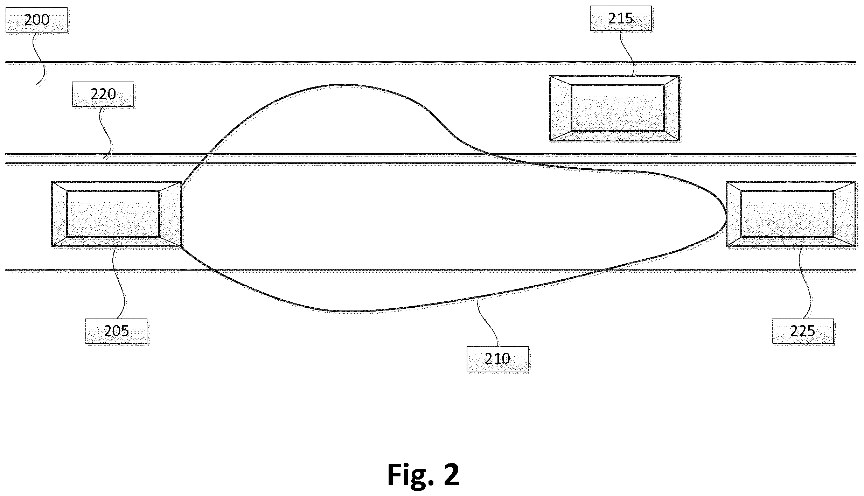

Fig. 2 is a schematic diagram of an exemplary roadway 200, motor vehicle 205, and a light distribution pattern 210 for low beam headlamps of motor vehicle 205. Light distribution pattern 210 for the low beam headlamps of motor vehicle 205 can be optically designed to minimize the amount of light that crosses the centerline 220 of roadway 200 to reduce dazzle (a blinding effect from the headlights) to a driver of an oncoming motor vehicle 215. Additionally, a range of the low beam headlamps of motor vehicle 205 can be limited to reduce dazzle in the rear-view mirror for a driver of motor vehicle 225 directly ahead of motor vehicle 205 driving in the same direction.

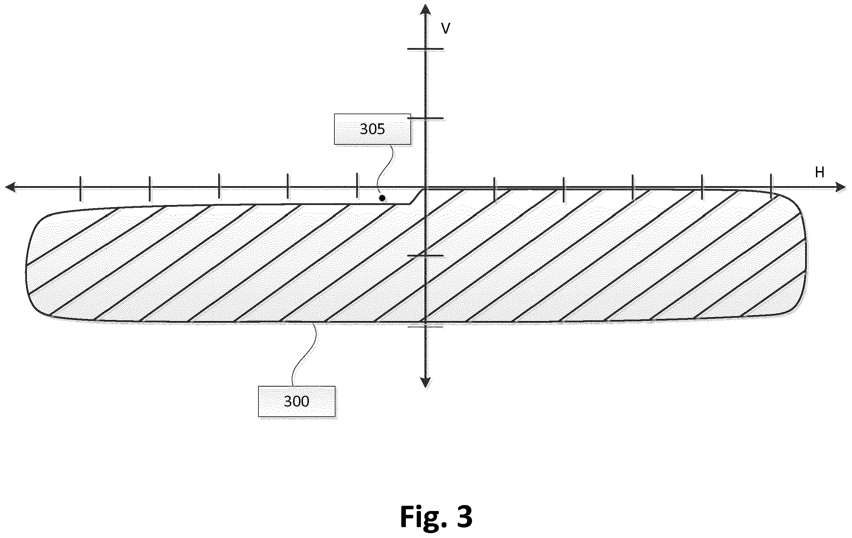

Fig. 3 illustrates an exemplary luminous intensity distribution 300 of a low beam headlamp as seen or measured at a screen spaced from, and parallel to, the front (emitting) face of the headlamp. A horizontal axis H and vertical axis V are shown overlaid on luminous intensity distribution 300 in Fig. 3. The horizontal axis H and vertical axis V identify horizontal and vertical planes intersecting both the center of the headlamp and the screen. The horizontal axis H and vertical axis V shown in Fig. 3 include tick marks spaced at 5° intervals.

Most states, countries, or regions which utilize motor vehicles have various requirements and standards that a vehicle must adhere to in order to legally use roadways. For example, Federal Motor Vehicle Safety Standard (FMVSS) No. 108 specifies various maximum and minimum photometric intensity values (based on angle) for headlamps on vehicles operated within the Unites States. In addition to these requirements, the Insurance Institute for Highway Safety (IIHS) in the United States has its own set of tests and ratings (Headlight Test and Rating Protocol) for headlamp performance. The IIHS tests and ratings seek to encourage manufacturers to improve the illumination performance in actual on-road use. IIHS evaluations have shown that the on-road illumination provided by vehicle headlamps varies widely. In addition, IIHS has rated the majority of headlamps in a poor category (e.g. insufficient illumination, excessive glare, etc.).

Point 305 in Fig. 3 is a key measurement location, defined by the FMVSS No. 108 standard, for ensuring that a low beam headlamp does not dazzle the driver of an oncoming motor vehicle. Point 305 is located 3.5° to the left of the vertical axis V and 0.86° below the horizontal axis H. To meet the requirements of FMVSS No. 108, a headlamp low beam must have a luminous (photometric) intensity below a specified threshold (12,000 cd, for example) at point 305. FMVSS No. 108 also specifies a minimum luminous intensity at other points on the luminous intensity distribution 300.

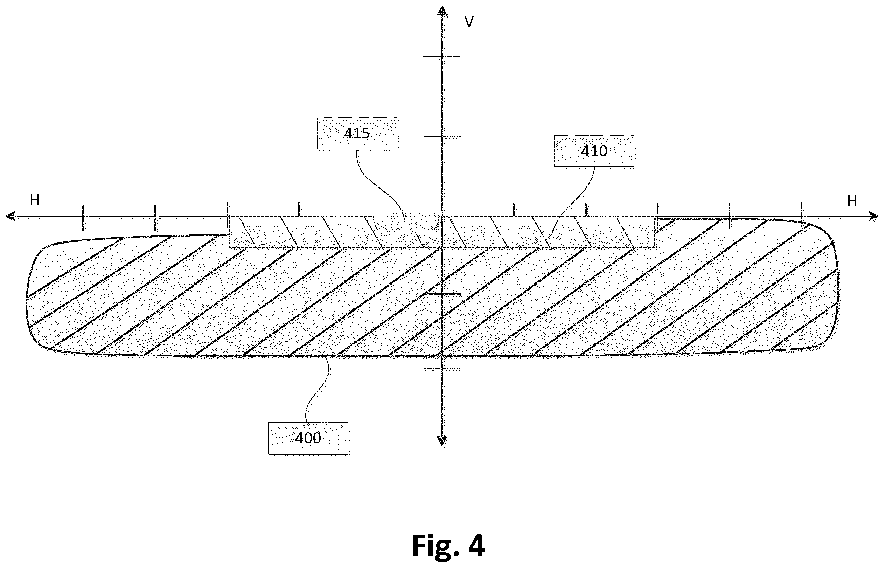

Fig. 4 illustrates an exemplary luminous intensity distribution 400 of a low beam headlamp similar to that shown in Fig. 3. Rectangular area 410, with notch 415, is a target zone that can be additionally illuminated to achieve higher ratings in the testing performed based on the IIHS Headlight Test and Rating Protocol. In some embodiments, the notch 415 reduces the light emission around the point 305 (Fig. 3) that is located 3.5° to the left of the vertical axis V and 0.86° below the horizontal axis H. The notch 415 can allow headlamp assembly 105a and 105b to yield improved IIHS ratings, while still meeting the requirements of FMVSS No. 108. In some embodiments, notch 415 can be located substantially to the left of vertical axis V. In other embodiments, notch 415 can be positioned symmetrically around the vertical axis V. Placement of the notch is generally dependent on the particular safety requirements and user preferences that do not conflict with the safety requirements.

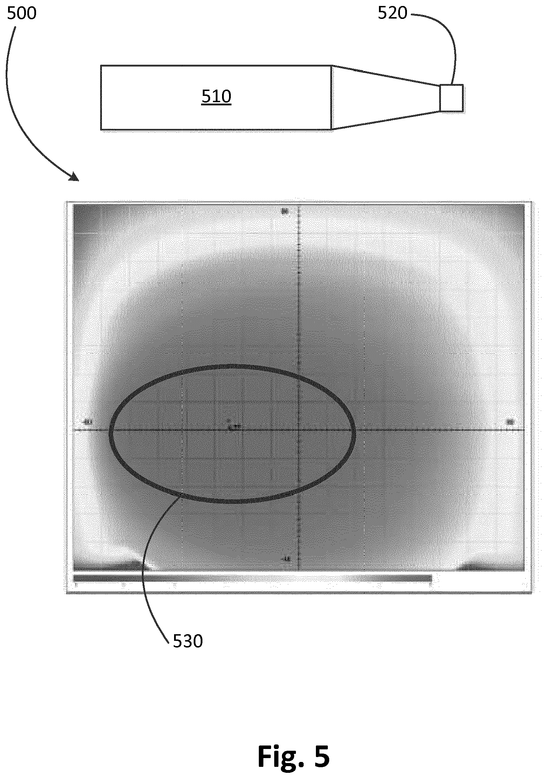

Fig. 5 illustrates a left oriented maximum intensity luminous distribution 500 and an associated optic fiber panel 510. A first light source 520 is coupled to the optic fiber panel 510 at a right end of the optic fiber panel 510. When the first light source 520 is activated, a region of maximum intensity 530 is not centered about a desired centroid in luminous output. For an automotive lamp, a desired centroid is governed by regulatory standards for optimum and safe illumination while driving in dark or during hazardous conditions.

In Fig. 5, the region of maximum intensity 530 is shifted to the left when light from the first light source 520 is directed towards the left. The shift in the region of maximum intensity 530 can be due to a geometry or configuration of the optic fiber panel 510, such as abrasions within the optic fiber panel 510. When light rays are transmitted from the first light source 520 in a first direction, the region of maximum intensity 530 is also shifted in the first direction by a predetermined radial amount from an axis normal to a mounting axis of the optic fiber panel 510.

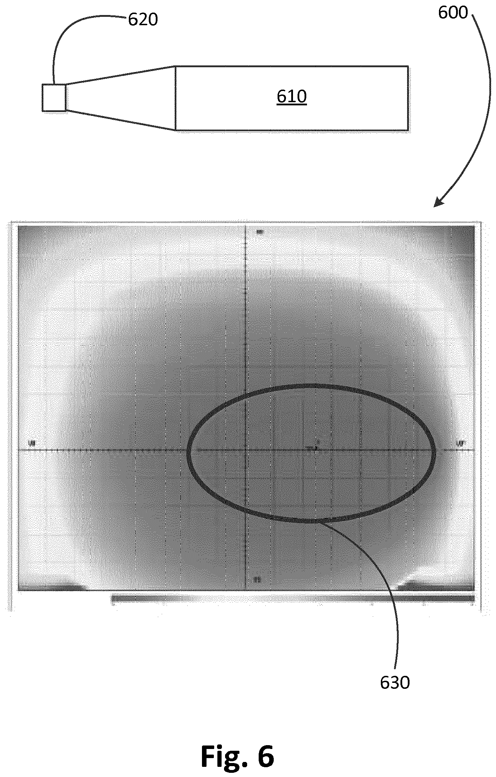

Fig. 6 illustrates a right oriented maximum intensity luminous distribution 600 and an associated optic fiber panel 610. A second light source 620 is coupled to the optic fiber panel 610 at a left end of the optic fiber panel 610. When the second light source 620 is activated, a region of maximum intensity 630 is not centered about a desired centroid in luminous output to create an optimum and safe illumination while driving in dark or during hazardous conditions.

In Fig. 6, the region of maximum intensity 630 is shifted to the right when light from the second light source 620 is directed towards the right. The shift in the region of maximum intensity 630 can be due to a geometry or configuration of the optic fiber panel 610, such as abrasions within the optic fiber panel 610. When light rays are transmitted from the second light source 620 in a second direction, the region of maximum intensity 630 is also shifted in the second direction by a predetermined radial amount from an axis normal to a mounting axis of the optic fiber panel 610.

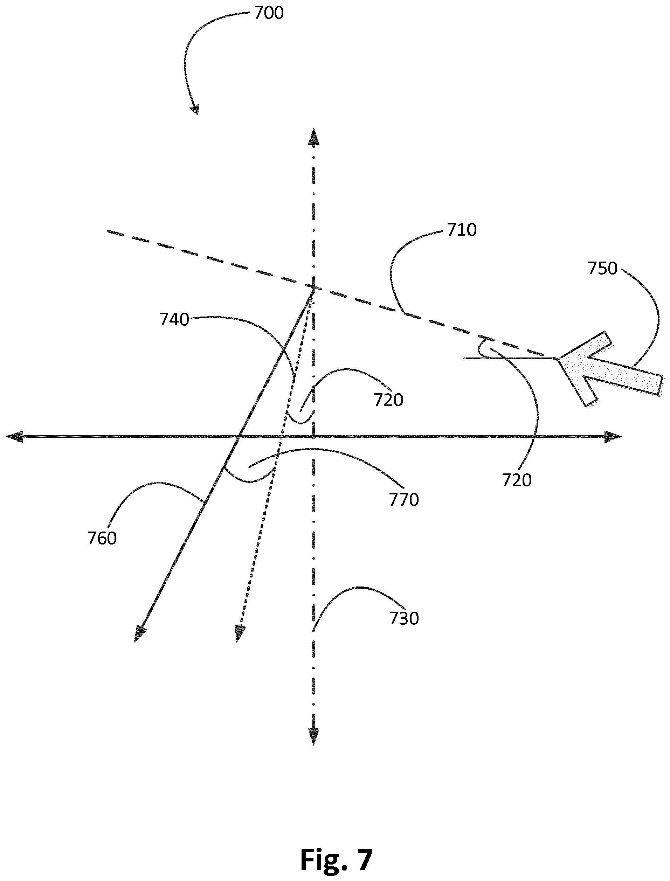

Fig. 7 is a Cartesian coordinate system illustrating a luminous intensity distribution 700 for a right side originating light source. A mounting axis 710 illustrates a plane in which the optic fiber panel 510 or 610 is mounted. A mounting angle 720 in which the optic fiber panel 510 or 610 is mounted can be determined by manufacturing or design criteria, such as a particular styling of a vehicle.

A light axis 730 is a vertical axis with respect to a targeted light emission direction. The light axis 730 represents the desired direction in which light is transmitted from an automotive lamp. A normal axis 740 is perpendicular to the mounting axis 710. An angle between the light axis 730 and the normal axis 740 is equal to the mounting angle 720. When the mounting axis 710 is completely horizontal, the normal axis 740 is aligned with the light axis 730.

A first light source direction 750 is illustrated as being transmitted from a light source towards the left in Fig. 7 along a plane of the mounting axis 710. The light source transmits light rays towards the left, causing a region of maximum intensity to shift towards the left. This shift in maximum intensity is illustrated by a material bias axis 760. The material bias axis 760 is positioned a predetermined radial amount from the normal axis 740. A predetermined radial angle 770 between the normal axis 740 and the material bias axis 760 can be determined by manufacturing or design criteria. Since the light from the first light source direction 750 is transmitted towards the left in Fig. 7, the material bias axis 760 is also located to the left of the normal axis 740 by the predetermined radial angle 770.

In Fig. 7, the light axis 730 represents the desired direction in which light is transmitted. The material bias axis 760 represents the actual direction of light transmission. However, the material bias axis 760 has shifted the transmitted light farther away from the light axis 730. As a result, the maximum intensity of light distribution is shifted towards the left of the desired centroid position of light axis 730. In an example, given for illustrative purposes only, a mounting angle 720 of 26 degrees and a predetermined radial angle 770 of 30 degrees will shift the desired illumination 56 degrees away from the desired light axis 730.

In one embodiment, abrasions or other aberrations within the optic fiber panel 510 or 610 can be adjusted to obtain a variation in the radial angle of the material bias axis 760 with respect to the normal axis 740. For example, shallower abrasions may increase the radial angle of the material bias axis 760 with respect to the normal axis 740, while deeper abrasions may decrease the radial angle of the material bias axis 760 with respect to the normal axis 740.

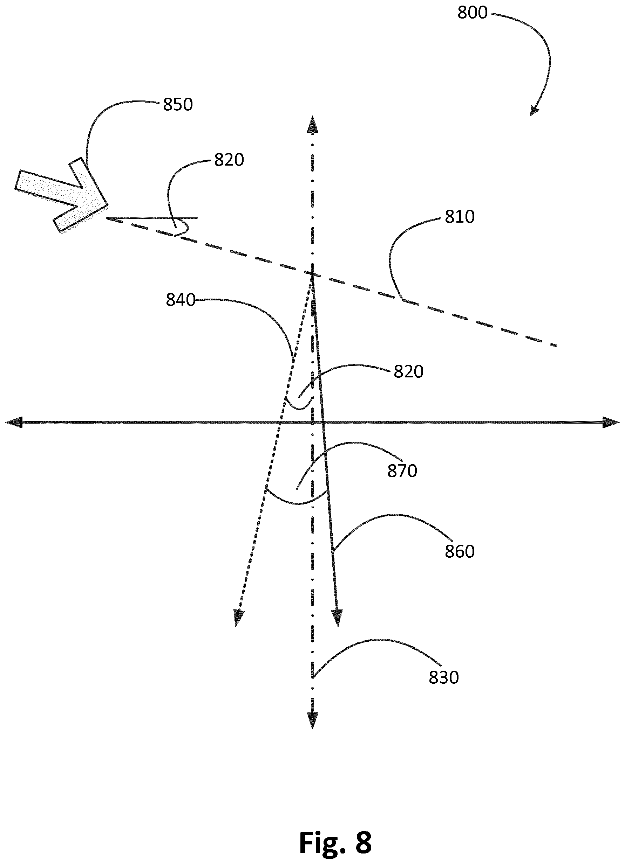

Fig. 8 is a Cartesian coordinate system illustrating a luminous intensity distribution 800 for a left side originating light source. A mounting axis 810 illustrates a plane in which the optic fiber panel 510 or 610 is mounted. A mounting angle 820 in which the optic fiber panel 510 or 610 is mounted can be determined by manufacturing or design criteria.

A light axis 830 is a vertical axis with respect to a targeted light emission direction. The light axis 830 represents the desired direction in which light is transmitted from an automotive lamp. A normal axis 840 is perpendicular to the mounting axis 810. An angle between the light axis 830 and the normal axis 840 is equal to the mounting angle 820. When the mounting axis 810 is completely horizontal, the normal axis 840 is aligned with the light axis 830.

A second light source direction 850 is illustrated as being transmitted from a light source towards the right in Fig. 8 along a plane of the mounting axis 810. The light source transmits light rays towards the right, causing a region of maximum intensity to shift towards the right. This shift in maximum intensity is illustrated by a material bias axis 860. The material bias axis 860 is positioned a predetermined radial amount from the normal axis 840. A predetermined radial angle 870 between the normal axis 840 and the material bias axis 860 can be determined by manufacturing or design criteria. Since the light from the second light source direction 850 is transmitted towards the right in Fig. 8, the material bias axis 860 is also located to the right of the normal axis 840 by the predetermined radial angle 870.

In Fig. 8, light axis 830 represents the desired direction in which light is transmitted. The material bias axis 860 represents the actual direction of light transmission. The material bias axis 860 has shifted the transmitted light to the right towards the desired centroid position of light axis 830. In an example, given for illustrative purposes only, a mounting angle 820 of 26 degrees and a predetermined radial angle 870 of 30 degrees will shift the actual light transmission 4 degrees to the right of the desired light axis 830. As a result, the actual light transmission represented by material bias axis 860 is very close to being aligned with the desired light transmission represented by light axis 830.

Fig. 8 illustrates that a combination of light transmission direction from a light source and adjustment of the mounting axis 810 can optimize the material bias axis 860 with the light axis 830, resulting in a maximum intensity light distribution being aligned with the desired light transmission. For the previous example of a mounting angle 820 of 26 degrees and a predetermined radial angle 870 of 30 degrees, the mounting angle 820 can be adjusted to 30 degrees to completely align the actual light transmission represented by the material bias axis 860 with the desired light transmission represented by the light axis 830.

A power level of the light source can also be adjusted to align the material bias axis 860 closer to or in alignment with the light axis 830. In Fig. 8, using the previous example, the material bias axis 860 would be completely aligned with the light axis 830 in response to decreasing the predetermined radial angle 870 by 4 degrees. This could be achieved by decreasing a power level of the light source transmitting light in the second light source direction 850.

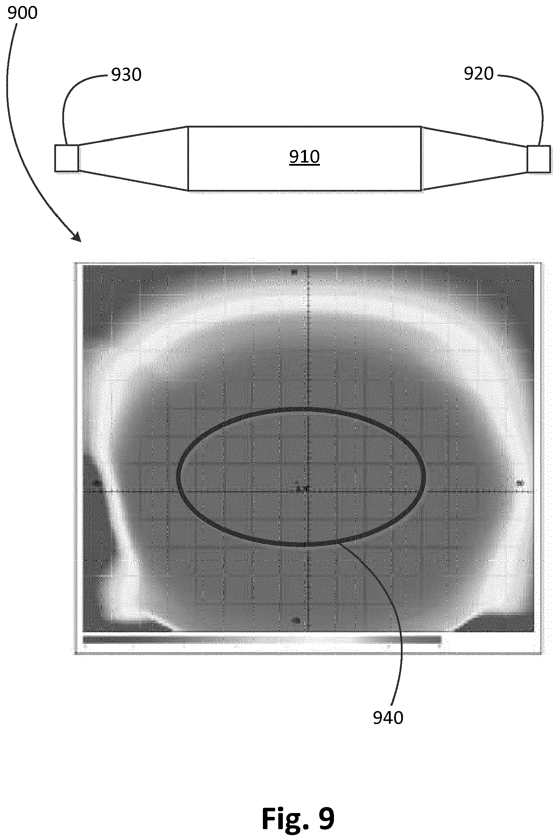

Fig. 9 illustrates a centered maximum intensity luminous distribution 900 and an associated optic fiber panel 910. Optic fiber panel 910 includes a first light source 920 positioned to the right of the optic fiber panel 910 and a second light source 930 positioned to the left of the optic fiber panel 910. A resulting region of maximum intensity 940 is centered about a desired centroid in luminous output to create an optimum and safe illumination while driving in dark or during hazardous conditions.

In Fig. 9, a shift in maximum intensity towards the left created by the first light source 920 is countered by a shift in maximum intensity towards the right created by the second light source 930 to create the region of maximum intensity 940 centered about the desired centroid. In one embodiment, a power level of the first light source 920 is equal to a power level of the second light source 930. However, other combinations of power levels for the first light source 920 and the second light source 930 are contemplated by embodiments described herein to optimize the region of maximum intensity 940 towards the desired centroid.

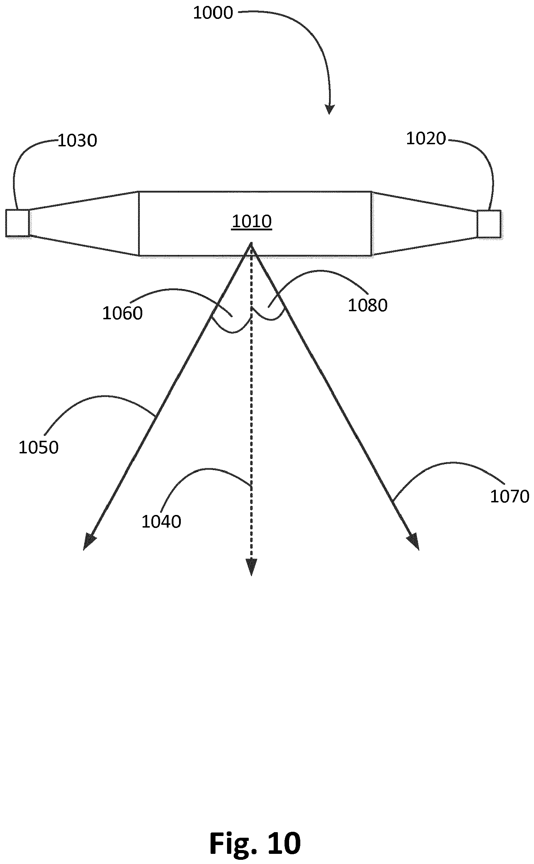

Fig. 10 is a block diagram with representative axes that illustrates a centered maximum intensity luminous distribution. An optic fiber panel 1010 includes a first light source 1020 located to the right of the optic fiber panel 1010 and a second light source 1030 located to the left of the optic fiber panel 1010. A light axis 1040 is a vertical axis with respect to a targeted light transmission direction. The light axis 1040 represents the desired direction in which light is transmitted from an automotive lamp. In Fig. 10, the light axis 1040 is also a normal axis since a mounting angle of optic fiber panel 1010 is zero.

A first material bias axis 1050 is positioned a predetermined radial amount from the light axis 1040 by a first radial angle 1060. Light rays from the first light source 1020 are transmitted to the left in Fig. 10, causing the first material bias axis 1050 to be positioned to the left of the light axis 1040 by the first radial angle 1060.

A second material bias axis 1070 is positioned a predetermined radial amount from the light axis 1040 by a second radial angle 1080. Light rays from the second light source 1030 are transmitted to the right in Fig. 10, causing the second material bias axis 1070 to be positioned to the right of the light axis 1040 by the second radial angle 1080.

The positions of the first material bias axis 1050 and the second material bias axis 1070 are adjusted such that the first radial angle 1060 is equal to the second radial angle 1080 to produce a region of maximum intensity centered about the light axis 1040. Stated another way, the first material bias axis 1050 and the second material bias axis 1070 are positioned a same predetermined radial amount and in opposite radial directions from the light axis 1040. In another embodiment, when the first radial angle 1060 is not equal to the second radial angle 1080, i.e. a position of the first material bias axis 1050 is not equal to and symmetrical with a position of the second material bias axis 1070, a power level of either or both of the first light source 1020 and the second light source 1030 can be adjusted, such that the first radial angle 1060 is equal to the second radial angle 1080. As a result, the net light distribution from both light sources aligns with the light axis 1040.

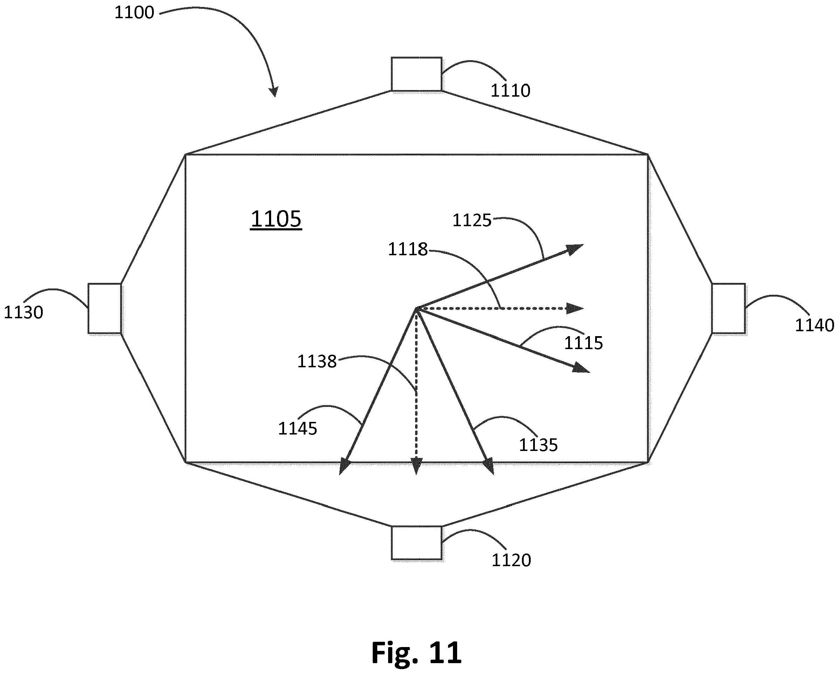

Fig. 11 is a block diagram with representative axes that illustrates a light module 1100 with two sets of first and second light sources in a hybrid fiber optic panel 1105. A first set of light sources includes a top first light source 1110 and a bottom second light source 1120. The top first light source 1110 creates a material bias axis 1115 positioned a predetermined radial amount below a light axis 1118. The light axis 1118 is a horizontal axis with respect to a targeted light emission direction. The bottom second light source 1120 creates a material bias axis 1125 positioned a predetermined radial amount above light axis 1118.

A second set of light sources includes a left first light source 1130 and a right second light source 1140. The left first light source 1130 creates a material bias axis 1135 positioned a predetermined radial amount to the right of a light axis 1138. The light axis 1138 is a vertical axis with respect to a targeted light emission direction. The right second light source 1140 creates a material bias axis 1145 positioned a predetermined radial amount to the left of light axis 1138.

Hybrid fiber optic panel 1105 includes a first fiber optic panel for the first set of light sources and a second fiber optic panel for the second set of light sources. In one embodiment, the hybrid fiber optic panel 1105 includes a separate layer for each set of light sources. For example, the first fiber optic panel with the top first light source 1110 and the bottom second light source 1120 are positioned at a first layer, and the second fiber optic panel with the left first light source 1130 and the right second light source 1140 are positioned at a second layer. The first layer could be positioned either above or below the second layer, and the second layer could be positioned either above or below the first layer.

Light module 1100 provides a combination of two sets of light sources in perpendicularity. This provides full mobility in all directions. In one embodiment, the light module 1100 can be used for interior lighting of an automobile in which light transmission may be desired in multiple directions. For example, an automotive interior light can provide light in a direction towards various console controls, and also provide light in another direction towards a passenger seat. A dome light could also be implemented with light module 1100 in which light is directed in multiple directions.

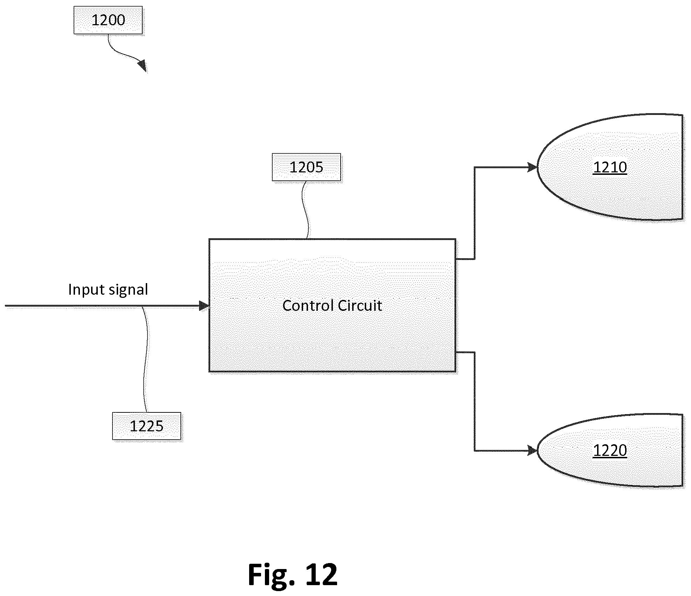

Fig. 12 illustrates a functional block diagram of a vehicle lamp assembly 1200. Vehicle lamp assembly 1200 includes a control circuit 1205 and a solid state light source module 1210. One or more optional light source modules 1220 include additional solid state light source modules and/or a laser light source module. An input signal 1225 is connected to the control circuit 1205. The input signal 1225 can be a switch to initiate or close power to one or more of the solid state light source module 1210 and the optional light source module(s) 1220. Other types of input signals 1225 are contemplated by embodiments described herein.

It should be noted that while Fig. 12 illustrates control circuit 1205 as included within vehicle lamp assembly 1200, control circuit 1205 could also be located apart from vehicle lamp assembly 1200. Moreover, a single control circuit 1205 can be employed for both a right and left vehicle lamp assembly such that the solid state light source module 1210 and the optional light source module(s) 1220 are driven in a synchronized manner.

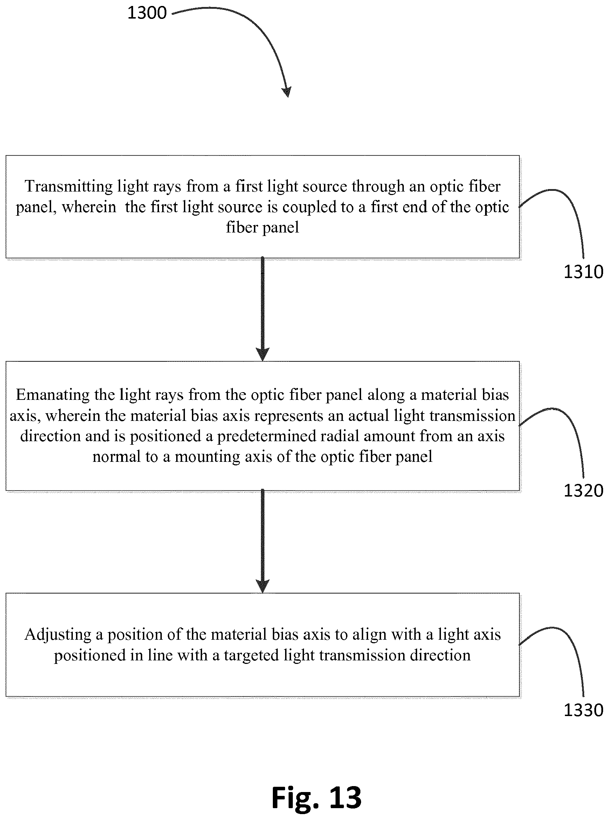

Fig. 13 is a flowchart for an exemplary method 1300 of aligning a transmitted light. In step 1310, light rays are transmitted from a first light source through an optic fiber panel. The first light source is coupled to a first end of the optic fiber panel.

In step 1320, the light rays are emanated from the optic fiber panel along a material bias axis. The material bias axis is positioned a predetermined radial amount from an axis normal to a mounting axis of the optic fiber panel.

In step 1330, a position of the material bias axis is adjusted to align with a light axis positioned in line with a targeted light transmission direction. The material bias axis can be adjusted in multiple ways, such as adjusting a number of light sources, adjusting a direction of light transmission from one or more light sources, adjusting a power level of one or more light sources, and adjusting a mounting angle of the optic fiber panel.

Embodiments described herein provide several advantages. Light transmitted from the optic fiber panel can be redirected to achieve a maximum light intensity at the centroid of the intended direction. Variable features include the direction of a light source transmission through the optic fiber panel, using multiple light sources with variable power levels, and adjusting a mounting angle of the fiber optic panel. These advantages provide several avenues to adjust the direction of light transmission without changing the geometry of the lamp.

Embodiments described herein can be implemented in automotive lamps, such as front and rear signaling or front and rear lamps. In addition, embodiments can also be implemented in interior automotive lighting, as described herein.

While certain embodiments have been described herein, these embodiments are presented by way of example only, and are not intended to limit the scope of the disclosure. Using the teachings in this disclosure, a person having ordinary skill in the art can modify and adapt the disclosure in various ways, making omissions, substitutions, and/or changes in the form of the embodiments described herein, without departing from the spirit of the disclosure. Moreover, in interpreting the disclosure, all terms should be interpreted in the broadest possible manner consistent with the context. The accompanying claims and their equivalents are intended to cover such forms or modifications, as would fall within the scope and spirit of the disclosure. In particular all the features, described in the specification in relation to an optic fiber panel, can be applied similarly to an optic fiber bundle, a light guide bundle or a light guide weaving.

## Claims

1. A light module, comprising:
a plurality of optic fibers configured as an optic fiber panel, wherein a mounting axis is positioned parallel to the optic fiber panel, a normal axis is positioned perpendicular to the optic fiber panel, a light axis is positioned in line with a targeted light transmission direction, and a material bias axis representing an actual light transmission direction is positioned a predetermined radial amount from the normal axis; and
a first light source coupled to a first end of the optic fiber panel, wherein a direction and power of transmitted light rays from the first light source through the optic fiber panel are adjustable to align the material bias axis with the light axis.

2. The light module of claim 1, wherein the material bias axis comprises a primary light transmission axis about which the transmitted light rays are centered.

3. The light module of claim 1, wherein the material bias axis is positioned the predetermined radial amount from the normal axis in a first direction when the light rays are transmitted through the optic fiber panel in the first direction, and the material bias axis is positioned the predetermined radial amount from the normal axis in a second direction when the light rays are transmitted through the optic fiber panel in the second direction.

4. The light module of claim 1, further comprising:
a second light source coupled to a second end of the optic fiber panel.

5. The light module of claim 4, wherein a position of the material bias axis is adjusted via one or more adjustments to a power level of the first light source and to a power level of the second light source.

6. The light module of claim 1, wherein a maximum region of illumination of the light module approaches a central targeted region when the material bias axis approaches the light axis.

7. The light module of claim 1, wherein a position of the material bias axis is determined by a number of light sources.

8. The light module of claim 1, wherein a position of the material bias axis is determined by a mounting angle of the light module.

9. A method of aligning a transmitted light, the method comprising:
transmitting light rays from a first light source through an optic fiber panel, wherein the first light source is coupled to a first end of the optic fiber panel;
emanating the light rays from the optic fiber panel along a material bias axis, wherein the material bias axis represents an actual light transmission direction and is positioned a predetermined radial amount from an axis normal to a mounting axis of the optic fiber panel; and
adjusting a position of the material bias axis to align with a light axis positioned in line with a targeted light transmission direction.

10. The method of claim 9, further comprising:
transmitting the light rays through the optic fiber panel in a first direction; and
adjusting the position of the material bias axis by the predetermined radial amount in the first direction.

11. The method of claim 10, further comprising:
transmitting the light rays through the optic fiber panel in a second direction, via a second light source coupled to a second end of the optic fiber panel; and
adjusting the position of the material bias axis by the predetermined radial amount in the second direction.

12. The method of claim 11, further comprising:
transmitting the light rays through the optic fiber panel in the first direction via the first light source and in the second direction via the second light source; and
adjusting a power level of one or more of the first light source and the second light source to align the position of the material bias axis with the light axis.

13. The method of claim 12, further comprising:
adjusting the position of the material bias axis via adjusting a power level of the first light source or adjusting a power level of the second light source.

14. The method of claim 9, further comprising:
adjusting the position of the material bias axis via adjusting a number of light sources.

15. The method of claim 9, further comprising:
adjusting the position of the material bias axis via adjusting a mounting angle of the light module.

16. The method of claim 9, wherein the material bias axis comprises a primary light transmission axis about which the transmitted light rays are centered.
